# EUROPEAN PATENT APPLICATION

(11) **EP 4 167 680 A1**
(43) Date of publication of application: **19.04.2023**
(21) Application number: 21837346.2
(22) Date of filing: 08.07.2021
(51) Int. Cl.: H04W 76/28, H04W 76/14, H04W 72/12

(54) **APPARATUS AND METHOD FOR SUPPORTING SIDELINK OPERATION OF TERMINAL IN DISCONTINUOUS RECEPTION MODE IN WIRELESS COMMUNICATION SYSTEM**

(30) Priority: 09.07.2020 KR 20200084597
(71) Applicant: Samsung Electronics Co., Ltd., Gyeonggi-do 16677 (KR)
(72) Inventor: KANG, Hyunjeong, Suwon-si, Gyeonggi-do 16677 (KR); AGIWAL, Anil, Suwon-si, Gyeonggi-do 16677 (KR)
(74) Representative: Gulde & Partner
(86) International application number: PCT/KR2021/008724
(87) International publication number: WO 2022/010284

(57) **Abstract**

Disclosed is a method by which a first UE operates in a wireless communication system. The method by which the first UE operates includes transmitting sidelink discontinuous reception (DRX) preference information to a base station (BS), receiving Uu DRX configuration information from the BS, based on the sidelink DRX preference information, and transmitting data to a second UE, based on at least one of the Uu DRX configuration information or sidelink DRX configuration information.

## Description

### Technical Field

The disclosure relates to a wireless communication system, and more particularly, to a method and apparatus for processing sidelink based data transmission or reception while a terminal performs discontinuous reception (DRX) of a connected mode in a wireless communication system.

### Background Art

To meet the demand with respect to ever-increasing wireless data traffic since the commercialization of the 4th generation (4G) communication system, there have been efforts to develop an advanced 5th generation (5G) or pre-5G communication system. For this reason, the 5G or pre-5G communication system is also called a beyond 4th-generation (4G) network communication system or post long term evolution (LTE) system.

Implementation of the 5G communication system using ultrahigh frequency (millimeter wave (mmWave)) bands, e.g., 60 giga hertz (GHz) bands, is being considered to attain higher data transfer rates. To reduce propagation loss of radio waves and increase a transmission range in the ultrahigh frequency bands, beamforming, massive multiple-input multiple-output (MIMO), full dimensional MIMO (FD-MIMO), array antenna, analog beamforming, and large-scale antenna techniques are under discussion.

To improve system networks, technologies for advanced small cells, cloud radio access networks (RANs), ultra-dense networks, device to device (D2D) communication, wireless backhaul, moving networks, cooperative communication, coordinated multi-points (CoMP), reception-end interference cancellation and the like are also being developed in the 5G communication system.

In addition, in the 5G system, an advanced coding modulation (ACM) method, e.g., hybrid FSK and QAM modulation (FQAM), sliding window superposition coding (SWSC), and advanced access technology, e.g., filter bank multi carrier (FBMC), non-orthogonal multiple access (NOMA), and sparse code multiple access (SCMA) are being developed.

In the meantime, the Internet is evolving from a human-oriented connectivity network where humans generate and consume information to an Internet of things (IoT) network where distributed entities or things send, receive and process information without human intervention. Internet of Everything (IoE) technologies, in which a big data processing technology through connection with a cloud server, for example, are combined with an loT technology, have also emerged. To implement loT, various technologies, such as a sensing technology, a wired/wireless communication and network infrastructure, a service interfacing technology, and a security technology are required, and even technologies for sensor networks, machine to machine (M2M) communication, machine type communication (MTC) for connection between things are being studied these days. In the loT environment, intelligent Internet technology (IT) services that create new values for human life by collecting and analyzing data generated from connected things may be provided. IoT may be applied to a variety of areas, such as smart homes, smart buildings, smart cities, smart cars or connected cars, smart grids, health care, smart home appliances and advanced medical services through convergence and combination between existing information technologies (IT) and various industrial applications.

In this regard, various attempts to apply the 5G communication system to the loT network are being made. For example, technologies regarding sensor network, M2M, MTC, etc., are implemented by the 5G communication technologies, such as beamforming, MIMO, array antenna schemes, etc. Even application of a cloud radio access network (cloud RAN) as the aforementioned big data processing technology may be an example of convergence of 5G and loT technologies.

Furthermore, terminal direction communication (sidelink communication) using the 5G communication system is being studied, and the sidelink communication is expected to provide various services for the user by being applied to, for example, vehicle-to-everything (hereinafter, V2X).

### Disclosure

### Technical Problem

The disclosure provides an apparatus and method for processing sidelink based data transmission or reception while a terminal performs discontinuous reception (DRX) in a radio resource control (RRC) connected (RRC_CONNECTED) mode in a wireless communication system.

### Technical Solution

The disclosure may disclose a method by which a first user equipment (UE) operates in a wireless communication system. The method by which the first UE operates includes transmitting sidelink discontinuous reception (DRX) preference information to a base station (BS), receiving Uu DRX configuration information from the BS, based on the sidelink DRX preference information, and transmitting data to a second UE, based on at least one of the Uu DRX configuration information or sidelink DRX configuration information.

### Description of Drawings

FIG. 1 illustrates a wireless communication system, according to an embodiment of the disclosure.
FIG. 2 is a block diagram of a base station (BS) in a wireless communication system, according to an embodiment of the disclosure.
FIG. 3 is a block diagram of a user equipment (UE) in a wireless communication system, according to an embodiment of the disclosure.
FIG. 4 is a block diagram of a communicator in a wireless communication system, according to an embodiment of the disclosure.
FIG. 5 illustrates a structure of radio time-frequency resources in a wireless communication system, according to an embodiment of the disclosure.
FIG. 6A illustrates a sidelink communication scenario, according to an embodiment of the disclosure.
FIG. 6B illustrates a sidelink communication scenario, according to an embodiment of the disclosure.
FIG. 6C illustrates a sidelink communication scenario, according to an embodiment of the disclosure.
FIG. 6D illustrates a sidelink communication scenario, according to an embodiment of the disclosure.
FIG. 7A is a diagram for describing a transmission method of sidelink communication, according to an embodiment of the disclosure.
FIG. 7B is a diagram for describing a transmission method of sidelink communication, according to an embodiment of the disclosure.
FIG. 8 is a diagram illustrating operations of a network processing discontinuous reception (DRX) configuration of a UE, according to an embodiment of the disclosure.
FIGS. 9A, 9B, 9C, 9D and 9E are diagrams illustrating operations of a UE processing a DRX configuration, according to an embodiment of the disclosure.
FIGS. 10A and 10B are diagrams illustrating operations of a UE processing a DRX configuration, according to an embodiment of the disclosure.
FIG. 11 is a diagram illustrating operations of a UE processing sidelink DRX and Uu link DRX, according to an embodiment of the disclosure.
FIG. 12 is a diagram illustrating operations of a UE processing sidelink DRX and Uu link DRX, according to an embodiment of the disclosure.
FIG. 13 is a diagram illustrating operations of a UE processing sidelink DRX and Uu link DRX, according to an embodiment of the disclosure.

### Best Mode

According to an embodiment of the disclosure, a method by which a first user equipment (UE) operates in a wireless communication system may be provided. The method by which the first UE operates may include transmitting sidelink discontinuous reception (DRX) preference information to a base station (BS), receiving Uu DRX configuration information from the BS based on the sidelink DRX preference information, and transmitting data to a second UE based on at least one of the Uu DRX configuration information or sidelink DRX configuration information.

In an embodiment of the disclosure, the method by which the first UE operates may further include receiving the sidelink DRX configuration information from the BS. The sidelink DRX configuration information may be determined based on the sidelink DRX preference information.

In an embodiment of the disclosure, the method by which the first UE operates may further include determining the sidelink DRX configuration information based on the Uu DRX configuration information.

In an embodiment of the disclosure, the sidelink DRX preference information may include information indicating whether the sidelink DRX configuration information corresponds to the Uu DRX configuration information, and when the first UE requests correspondence between the sidelink DRX configuration information and the Uu DRX configuration information, the sidelink DRX preference information may be configured to have a value that corresponds to a Uu DRX operation parameter.

In an embodiment of the disclosure, the sidelink DRX preference information may be configured by the second UE.

According to an embodiment of the disclosure, a method by which a BS operates in a wireless communication system may be provided. The method by which the BS operates may include receiving sidelink DRX preference information from a first UE, determining Uu DRX configuration information based on the sidelink DRX preference information, and transmitting the Uu DRX configuration information to the first UE.

In an embodiment of the disclosure, the method by which the BS operates may further include transmitting sidelink DRX configuration information to the first UE. The sidelink DRX configuration information may be determined based on the sidelink DRX preference information.

In an embodiment of the disclosure, the sidelink DRX configuration information may be determined based on the Uu DRX configuration information.

In an embodiment of the disclosure, the sidelink DRX preference information may include information indicating whether the sidelink DRX configuration information corresponds to the Uu DRX configuration information, and when the first UE requests correspondence between the sidelink DRX configuration information and the Uu DRX configuration information, the sidelink DRX preference information may be configured to have a value that corresponds to a Uu DRX operation parameter.

In an embodiment of the disclosure, the sidelink DRX preference information may be configured by the second UE.

According to an embodiment of the disclosure, a first UE operating in a wireless communication system may be provided. The first UE may include a communicator; and a controller, and the controller may control the communicator to transmit sidelink DRX preference information to a BS, control the communicator to receive Uu DRX configuration information from the BS based on the sidelink DRX preference information, control the communicator to transmit data to a second UE based on at least one of the Uu DRX configuration information or sidelink DRX configuration information.

In an embodiment of the disclosure, the controller may receive the sidelink DRX configuration information from the BS, and the sidelink DRX configuration information may be determined based on the sidelink DRX preference information.

In an embodiment of the disclosure, the controller may determine the sidelink DRX configuration information based on the Uu DRX configuration information.

In an embodiment of the disclosure, the sidelink DRX preference information may include information indicating whether the sidelink DRX configuration information corresponds to the Uu DRX configuration information, and when the first UE requests correspondence between the sidelink DRX configuration information and the Uu DRX configuration information, the sidelink DRX preference information may be configured to have a value that corresponds to a Uu DRX operation parameter.

In an embodiment of the disclosure, the sidelink DRX preference information may be configured by the second UE.

### Mode for Invention

Embodiments of the disclosure will now be described with reference to accompanying drawings. It is noted that in the drawings, like elements are denoted by like reference numerals. Detailed descriptions of functions and features known to the public, which might obscure the gist of the disclosure, will be omitted.

Technological content well-known in the art but not directly related to the disclosure will be omitted in the following description. Through the omission of the content that might otherwise obscure the subject matter of the disclosure, the subject matter will be understood more clearly.

For the same reason, some parts in the accompanying drawings are exaggerated, omitted or schematically illustrated. The size of the respective elements may not fully reflect their actual size. Like numbers refer to like elements throughout the drawings.

Advantages and features of the disclosure, and methods for attaining them will be understood more clearly with reference to the following embodiments of the disclosure, which will be described in detail later along with the accompanying drawings. The embodiments of the disclosure may, however, be embodied in many different forms and should not be construed as limited to the embodiments set forth herein; rather, these embodiments of the disclosure are provided so that this disclosure will be thorough and complete, and will fully convey the scope of the embodiments of the disclosure to those of ordinary skill in the art. Like numbers refer to like elements throughout the specification.

It may be understood that respective blocks and combinations of the blocks in processing flowcharts will be performed by computer program instructions. The computer program instructions may be loaded on a processor of a general-purpose computer, a special-purpose computer, or other programmable data processing equipment, and thus they generate means for performing functions described in the block(s) of the flowcharts when executed by the processor of the computer or other programmable data processing equipment. The computer program instructions may also be stored in computer-usable or computer-readable memories oriented for computers or other programmable data processing equipment, so it is possible to manufacture a product that contains instruction means for performing functions described in the block(s) of the flowchart. The computer program instructions may also be loaded on computers or programmable data processing equipment, so it is possible for the instructions to generate a process executed by the computer or the other programmable data processing equipment to provide steps for performing functions described in the block(s) of the flowchart.

Furthermore, each block may represent a part of a module, segment, or code including one or more executable instructions to perform particular logic function(s). It is noted that the functions described in the blocks may occur out of order in some alternative embodiments. For example, two blocks shown in succession may in fact be executed substantially concurrently or the blocks may sometimes be executed in the reverse order, depending upon the functionality involved.

Furthermore, the term 'unit' or 'module' as herein used refers to a software or hardware component, such as a field programmable gate array (FPGA) or application specific integrated circuit (ASIC) which plays some role. However, the module is not limited to software or hardware. The module may be configured to be stored in an addressable storage medium, or to execute one or more processors. For example, the modules may include components, such as software components, object-oriented software components, class components and task components, processes, functions, attributes, procedures, subroutines, segments of program codes, drivers, firmware, microcodes, circuits, data, databases, data structures, tables, arrays, and variables. Functions served by components and modules may be combined into a smaller number of components and modules, or further divided into a larger number of components and modules. Moreover, the components and modules may be implemented to execute one or more central processing units (CPUs) in a device or security multimedia card.

Although embodiments of the disclosure will be primarily focused on a radio access network, New RAN (NR), and a core network, packet core (5G system, 5G core network, or next generation (NG) core) in a 5G mobile communication standard specified by the third generation partnership project (3GPP), the subject matter of the disclosure may also be applicable to other communication systems with a similar technical background with minor changes without significantly departing from the scope of the disclosure, which may be possible under the determination of those of ordinary skill in the art to which the disclosure pertains.

In the 5G system, to support network automation, a network data collection and analysis function (NWDAF), which is a network function to provide a function that analyzes and provides data collected by the 5G network, may be defined. The NWDAF may collect/store/analyze information from the 5G network and provide the result to an unspecified network function (NF), and the result of analysis may be used by each NF independently.

For convenience of explanation, some of the terms and names defined by the 3rd generation partnership project long term evolution (3GPP LTE) standard (a standard for 5G, NR, LTE or similar system) will be used hereinafter. The disclosure is not, however, limited to the terms and definitions, and may be equally applied to any systems that conform to other standards.

The disclosure relates to an apparatus and method for processing sidelink data transmission or reception by a UE in a wireless communication system during a discontinuous reception (DRX) mode. Specifically, in the disclosure, a network may configure and transmit a DRX group to a UE to support and process sidelink data transmission or reception in the DRX mode of the UE and the UE may perform sidelink based data transmission or reception during the DRX mode based on the DRX group configuration information.

According to an embodiment of the disclosure, the UE may operate the DRX group, thereby gaining an effect of continuously receiving services by sidelink while reducing battery consumption of the UE.

In the following description, the terms referring to a signal, a channel, control information, a network entity, a component of an apparatus, etc., are mentioned for convenience of explanation. Accordingly, the disclosure is not limited to the terms as herein used, and may use different terms to refer to the items having the same meaning in a technological sense.

In the following description, a physical channel and a signal may be interchangeably used with data or a control signal. For example, a physical downlink shared channel (PDSCH) is a term to refer to a physical channel on which to transmit data, but may also be used to refer to data. In other words, in this specification, an expression "transmit a physical channel" may be equally interpreted as an expression "transmit data or a signal on a physical channel".

Throughout the specification, higher layer signaling refers to a method of transferring a signal to a UE from a BS on a downlink data channel of a physical layer or to the BS from the UE on an uplink data channel of the physical layer. The higher layer signaling may be understood as radio resource control (RRC) signaling or a media access control (MAC) control element (CE).

In the disclosure, the expression like 'exceeding or greater (larger) than' or 'smaller (less) than' is used to determine whether a particular condition (or criterion) is satisfied or fulfilled, but the expression may not exclude meaning of 'equal to or greater (larger) than' or 'equal to or smaller (less) than'. A condition written with 'equal to or greater (larger) than' may be replaced with 'exceeding', a condition with 'equal to or smaller (less) than' may be replaced with 'smaller (less) than', and a condition with 'equal to or greater (larger) than ~ and smaller (less) than ~' may be replaced with 'exceeding ~ and equal to or smaller (less) than ∼'.

Furthermore, an embodiment of the disclosure may be described with the terms used in some communication standards (e.g., the third generation partnership project (3GPP)), but the terms are merely examples for explanation. An embodiment of the disclosure may also be applied with simple modifications to other communication systems.

According to an embodiment of the disclosure, a method of supporting sidelink based data transmission or reception of a UE in a wireless communication system may include organizing a secondary DRX group comprised of one or more serving cells which control and support sidelink based data transmission or reception; controlling and supporting sidelink data transmission or reception through a serving cell belonging to the secondary DRX group; and performing a DRX operation for a serving cell belonging to a primary DRX group (a DRX group organized separately from the secondary DRX group).

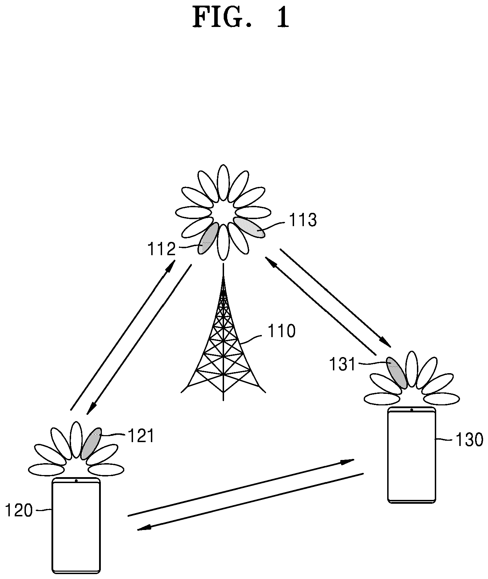

FIG. 1 illustrates a wireless communication system, according to an embodiment of the disclosure.

In FIG. 1, as certain nodes that use wireless channels in a wireless communication system, a BS 110, a UE 120, and a UE 130 are illustrated. Although there is one BS in FIG. 1, another BS, which is identical or similar to the BS 110, may be further included.

The BS 110 is a network infrastructure that provides wireless access for the UEs 120 and 130. The BS 110 has coverage defined to be a certain geographical area based on a range within which a signal may be transmitted from the BS 110. The BS 110 may also be referred to as an access point (AP), an eNodeB (eNB), a fifth generation (5G) node, a next generation nodeB (gNB), a wireless point, a transmission/reception point (TRP), or other terms having equal technical meaning.

Each of the first UE 120 and the second UE 130 is a device used by a user, which may perform communication with the BS 110 through a wireless channel. A link directed from the BS 110 to the first UE 120 or the second UE 130 may be called a downlink (DL), and a link directed from the first UE 120 or the second UE 130 to the BS 110 may be called an uplink (UL). Furthermore, the first UE 120 and the second UE 130 may perform communication with each other on a wireless channel. In this case, a link between the first UE 120 and the second UE 130 may be called a sidelink, which may be referred to as a PC5 interface. In some cases, at least one of the first UE 120 and the second UE 130 may be operated without intervention of the user. For example, at least one of the first UE 120 and the second UE 130 is a device for performing machine type communication (MTC), which may not be carried by the user. Each of the first UE 120 and the second UE 130 may also be referred to as a terminal, a mobile station (MS), a subscriber station, a remote terminal, a wireless terminal, or a user device, or other terms having equal technical meaning.

The BS 110, the first UE 120, and the second UE 130 may transmit and receive wireless signals in a millimeter wave (mmWave) band (e.g., 28 GHz, 30 GHz, 38 GHz, or 60 GHz). In this case, to increase channel gains, the BS 110, the first UE 120, and the second UE 130 may perform beamforming. Herein, the beamforming may include transmit beamforming and receive beamforming. That is, the BS 110, the first UE 120, and the second UE 130 may give directivity to a signal to be transmitted or a received signal. For this, the BS 110 and the UEs 120 and 130 may select serving beams 112, 113, 121 and 131 through a beam search or beam management procedure. Communication after the serving beams 112, 113, 121 and 131 are selected may be performed with resources quasi co-located (QCL) with resources in which the serving beams 112, 113, 121 and 131 have been transmitted.

When large-scale characteristics of a channel that has transferred a symbol on a first antenna port may be inferred from a channel that has transferred a symbol on a second antenna port, the first and second antenna ports may be estimated as being QCLed. For example, the large-scale characteristics may include at least one of delay spread, Doppler spread, Doppler shift, an average gain, an average delay, or a spatial receiver parameter.

The first UE 120 and the second UE 130 shown in FIG. 1 may support vehicle communication. For the vehicle communication, standardization works on vehicle-to-everything (V2X) technologies in the LTE system based on the device-to-device (D2D) communication structure have been completed in the 3GPP release 14 and release 15, and efforts to develop a 5G NR based V2X technology are currently underway. NR V2X is expected to support UE-to-UE unicast communication, groupcast (or multicast) communication and broadcast communication. Furthermore, NR V2X is aiming to provide more advanced services such as platooning, advanced driving, extended sensor, and remote driving, unlike LTE V2X aiming at transmission or reception of basic safety information required for driving of a vehicle on the road.

The V2X services may be classified into basic safety services and advanced services. The basic safety services may include a vehicle notification (cooperative awareness message (CAM) or basic safety message (BSM)) service and detailed services such as a left-turn notification service, a car-ahead collision warning service, an emergency vehicle access notification service, an obstacleahead warning service, a crossroad traffic signal information service, etc., and transmit or receive the V2X information by using a broadcast, unicast or groupcast transmission method. Compared to the basic safety service, the advanced service not only has fortified quality of service (QoS) requirements but also requires a scheme for transmitting or receiving the V2X information by using the unicast and groupcast transmission methods in addition to the broadcast transmission method to transmit or receive the V2X information within a specific vehicle group or transmit or receive the V2X information between two vehicles. The advanced service may include detailed services such as a platooning service, an autonomous driving service, a remote driving service, an extended sensor based V2X service, etc.

Hereinafter, sidelink (SL) refers to a signal transmission or reception path between UEs, and may be interchangeably used with a PC5 interface. A base station (BS) is an entity that performs resource allocation for a UE, and may be a BS that supports both vehicle to everything (V2X) communication and common cellular communication, or a BS that supports only V2X communication. That is, the BS may refer to an NR BS (e.g., gNB), an LTE BS (e.g., eNB), or a road side unit (RSU). A UE or terminal may include not only a general user equipment or a mobile station, but also a vehicle that supports vehicle-to-vehicle (V2V) communication, a vehicle or a pedestrian's headset (e.g., a smartphone) that supports vehicle-to-pedestrian (V2P) communication, a vehicle that supports vehicle-to-network (V2N) communication, a vehicle that supports vehicle-to-infrastructure (V2I) communication, an RSU equipped with a UE function, an RSU equipped with a BS function, an RSU equipped with part of the BS function and a part of the UE function, or the like. Furthermore, a V2X UE used in the following description may also be referred to as a UE. In other words, in connection with V2X communication, a UE may be used as the V2X UE.

The BS and the UE are connected through a Uu interface. The UL refers to a wireless link on which the UE transmits data or a control signal to the BS, and the DL refers to a wireless link on which the BS transmits data or a control signal to the UE.

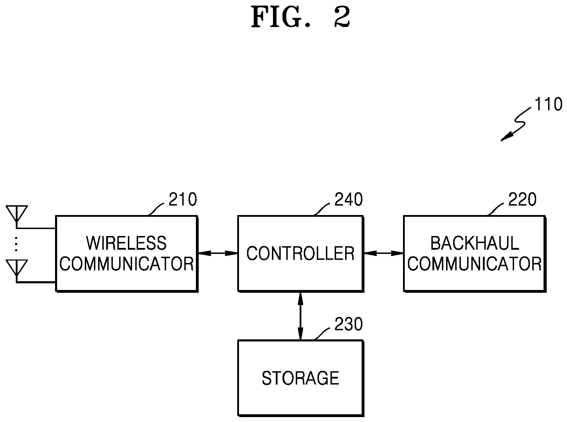

FIG. 2 is a block diagram of a BS in a wireless communication system, according to an embodiment of the disclosure. The block diagram illustrated in FIG. 2 may be understood as a configuration of the BS 110. "Unit", "module", "block", etc., as used herein each represent a unit for handling at least one function or operation, and may be implemented in hardware, software, or a combination thereof.

Referring to FIG. 2, the BS 110 includes a wireless communicator 210, a backhaul communicator 220, a storage 230, and a controller 240. The BS 110 may include more components than those shown in FIG. 2, or may include only some of the components shown in FIG. 2.

The wireless communicator 210 performs functions for transmitting or receiving signals on a wireless channel. For example, the wireless communicator 210 performs a conversion function between a baseband signal and a bitstream according to a physical layer standard of the system. For example, for data transmission, the wireless communicator 210 may generate complex symbols by encoding and modulating a bitstream for transmission. For data reception, the wireless communicator 210 reconstructs a received bitstream by demodulation and decoding of the baseband signal.

Furthermore, the wireless communicator 210 performs up-conversion on the baseband signal to a radio frequency (RF) band signal and transmit the resultant signal through an antenna, and performs down-conversion on an RF band signal received through an antenna to a baseband signal. For this, the wireless communicator 210 may include a transmit filter, a receive filter, an amplifier, a mixer, an oscillator, a digital to analog converter (DAC), an analog to digital converter (ADC), etc. The wireless communicator 210 may also include a number of transmission or reception paths. Furthermore, the wireless communicator 210 may include at least one antenna array comprised of multiple antenna elements.

From a perspective of hardware, the wireless communicator 210 may include a digital unit and an analog unit, and the analog unit may include multiple sub-units depending on operation power, operating frequency, etc. The digital unit may be implemented with at least one processor (e.g., a digital signal processor (DSP)).

The wireless communicator 210 transmits and receives signals as described above. All or part of the wireless communicator 210 may be referred to as a transmitter, a receiver, or a transceiver. In the following description, transmission or reception performed through a wireless channel is used as having meaning that the aforementioned processes are performed by the wireless communicator 210.

The backhaul communicator 220 provides an interface for communicating with other nodes in the network. Specifically, the backhaul communicator 220 converts a bitstream to be transmitted from the BS 110 to another node, e.g., another access node, another BS, a higher node, a core network, etc., into a physical signal, and converts a physical signal received from another node into a bitstream.

The storage 230 stores a basic program for operation of the BS 110, an application program, data such as configuration information. The storage 230 may include a volatile memory, a non-volatile memory, or a combination of the volatile memory and the non-volatile memory. The storage 230 may provide data stored therein at the request of the controller 240.

The controller 240 may control general operations of the BS 110. For example, the controller 240 may transmit and receive signals through the wireless communicator 210 or the backhaul communicator 220. The controller 240 may also record or read data onto or from the storage 230. The controller 240 may also perform functions of a protocol stack requested by a communication standard. In another implementation, the protocol stack may be included in the wireless communicator 210. For this, the controller 240 may include at least one processor. In various embodiments, the controller 240 may control the BS 110 to operate according to various embodiments, which will be described below.

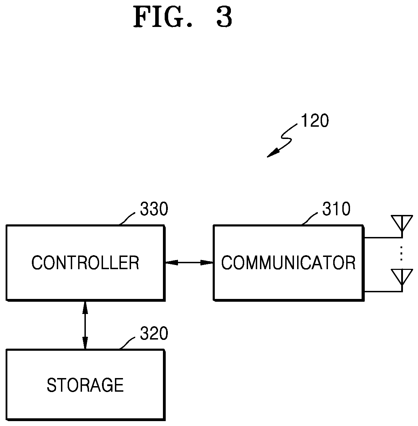

FIG. 3 illustrates a configuration of a UE in a wireless communication system, according to various embodiments of the disclosure.

The configuration illustrated in FIG. 3 may be understood as a configuration of the UE 120. "Unit", "module", "block", etc., as used herein each represent a unit for handling at least one function or operation, and may be implemented in hardware, software, or a combination thereof.

Referring to FIG. 3, a UE 120 includes a communicator 310, a storage 320, and a controller 330. The UE 120 may include more components than those shown in FIG. 3, or may include only some of the components shown in FIG. 3.

The communicator 310 performs functions for transmitting and receiving signals on a wireless channel. For example, the communicator 310 performs a conversion function between a baseband signal and a bitstream according to a physical layer standard of the system. For example, for data transmission, the communicator 310 may generate complex symbols by encoding and modulating a bitstream for transmission. For data reception, the communicator 310 reconstructs a received bitstream by demodulation and decoding of the baseband signal. Furthermore, the communicator 310 performs up-conversion on the baseband signal to a radio frequency (RF) band signal and transmit the resultant signal through an antenna, and may perform down-conversion on an RF band signal received through an antenna to a baseband signal. For example, the communicator 310 may include a transmit filter, a receive filter, an amplifier, a mixer, an oscillator, a digital-to-analog converter (DAC), an analog-to-digital converter (ADC), etc.

The communicator 310 may also include a number of transmission and reception paths. Furthermore, the communicator 310 may include at least one antenna array comprised of multiple antenna elements. From the perspective of hardware, the communicator 310 may be comprised of a digital circuit and an analog circuit (e.g., a radio frequency integrated circuit (RFIC)). In this case, the digital circuit and the analog circuit may be implemented in a single package. The communicator 310 may include multiple RF chains. Furthermore, the communicator 310 may perform beamforming.

The communicator 310 transmits and receives signals as described above. All or part of the communicator 310 may be referred to as a transmitter, a receiver, or a transceiver. In the following description, transmission or reception performed through a wireless channel is used as having meaning that the aforementioned processes are performed by the communicator 310.

The storage 320 stores a basic program for operation of the UE 120, an application program, data such as configuration information. The storage 320 may include a volatile memory, a non-volatile memory, or a combination of the volatile memory and the non-volatile memory. The storage 320 may provide data stored therein at the request of the controller 330.

The controller 330 controls general operations of the UE 120. For example, the controller 330 transmits and receives signals through the communicator 310. The controller 330 may also record or read data onto or from the storage 320. The controller 330 may further perform functions of a protocol stack requested by a communication standard. For this, the controller 330 may include at least one processor or microprocessor, or may be part of the processor. Furthermore, part of the communicator 310 and the controller 330 may be referred to as a communication processor (CP). According to embodiments, the controller 330 may control the UE 120 to operate according to embodiments, which will be described later.

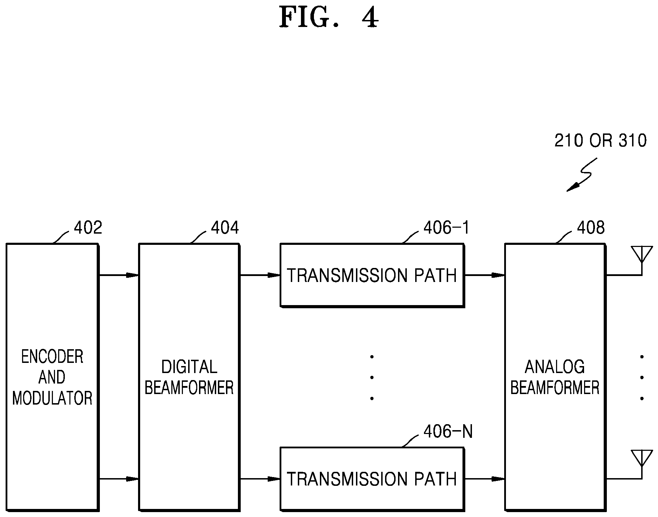

FIG. 4 is a block diagram of a communicator in a wireless communication system, according to an embodiment of the disclosure.

In FIG. 4, an example of a detailed configuration of the wireless communicator 210 of FIG. 2 or the communicator 310 of FIG. 3 is illustrated. Specifically, components, which are part of the wireless communicator 210 of FIG. 2 or the communicator 310 of FIG. 3, for performing beamforming are illustrated in FIG. 4.

Referring to FIG. 4, the wireless communicator 210 or the communicator 310 may include an encoder and modulator 402, a digital beamformer 404, multiple transmission paths 406-1 to 406-N, and an analog beamformer 408.

The encoder and modulator 402 may perform channel encoding. For channel encoding, at least one of low density parity check (LDPC) codes, convolution codes, or polar codes may be used. The encoder and modulator 402 may generate modulated symbols by performing constellation mapping.

The digital beamformer 404 performs beamforming on a digital signal (e.g., modulated symbols). For this, the digital beamformer 404 multiplies the modulated symbols by beamforming weights. The beamforming weights may be used to change magnitude and phase of a signal, and referred to as a precoding matrix, a precoder, etc. The digital beamformer 404 may output digitally beamformed modulated symbols on the multiple transmission paths 406-1 to 406-N. In this case, according to a multiple input multiple output (MIMO) transmission scheme, the modulated symbols may be multiplexed or the same modulated symbols may be provided on the multiple transmission paths 406-1 to 406-N.

The multiple transmission paths 406-1 to 406-N may convert digitally beamformed digital signals to analog signals. For this, the multiple transmission paths 406-1 to 406-N may each include an inverse fast Fourier transform (IFFT) operator, a cyclic prefix (CP) inserter, a DAC, and an upconverter. The CP inserter is for an OFDM scheme, and may be omitted when a different physical layer scheme (e.g., a filter bank multi-carrier (FBMC) scheme) is applied. In other words, the multiple transmission paths 406-1 to 406-N provide independent signal processing processes on multiple streams generated through digital beamforming. However, depending on implementation methods, some of the components of the multiple transmission paths 406-1 to 406-N may be shared.

The analog beamformer 408 may perform beamforming on an analog signal. For this, the digital beamformer 404 multiplies analog signals by beamforming weights. The beamforming weights may be used to change magnitude and phases of the signal. Specifically, depending on a coupling structure between the multiple transmission paths 406-1 to 406-N and antennas, the analog beamformer 408 may be variously configured. For example, each of the multiple transmission paths 406-1 to 406-N may be connected to an antenna array. For example, the multiple transmission paths 406-1 to 406-N may be connected to an antenna array. In another example, the multiple transmission paths 406-1 to 406-N may be adaptively connected to one, two, or more antenna arrays.

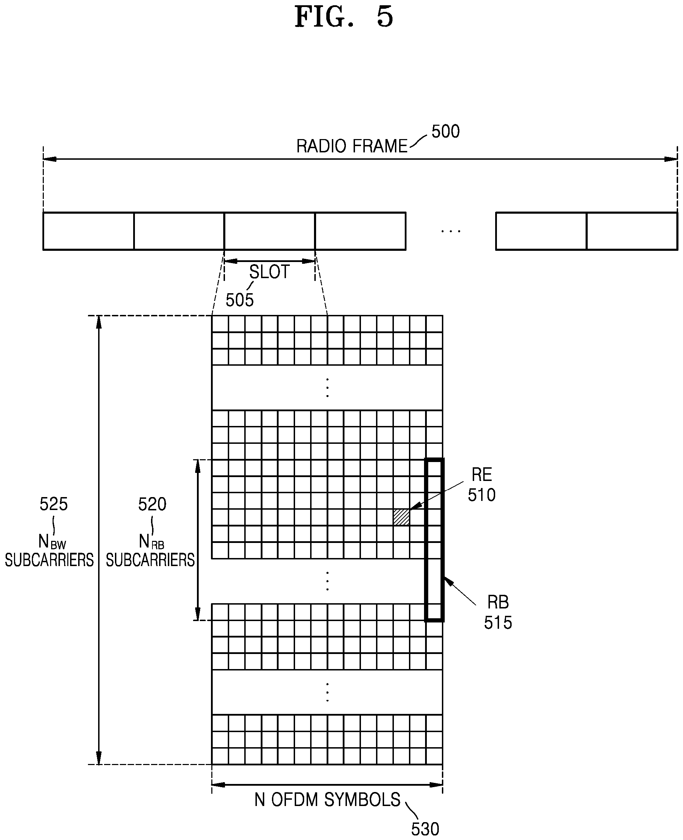

FIG. 5 illustrates a structure of radio time-frequency resources in a wireless communication system, according to an embodiment of the disclosure.

Referring to FIG. 5, in the radio resource domain, the horizontal axis represents the time domain, and the vertical axis represents the frequency domain. A minimum transmission unit in the time domain is an orthogonal frequency division multiplexing (OFDM) symbol or a discrete Fourier transform-spreading-OFDM (DFT-S-OFDM) symbol, and N_{symb} OFDM symbols or DFT-S-OFDM symbols 530 are included in one slot 505. Unlike the slot, in the NR system, a subframe may be defined to be 1.0 ms long, and a radio frame 500 may be defined to be 10 ms long. A minimum transmission unit in the frequency domain is a subcarrier, and bandwidth of the whole system transmission band may be comprised of a total of N_{BW} subcarriers 525. Specific numerical values of N_{symb}, N_{BW}, etc., may be variously applied depending on the system.

A basic unit in the time-frequency resource domain is a resource element (RE) 510, which may be represented by an OFDM symbol index or a DFT-S-OFDM symbol index and a subcarrier index. A resource block (RB) 515 may be defined by N_{RB} consecutive subcarriers 520 in the frequency domain. A common minimum transmission unit of data is an RB unit, and in the NR system, in general, N_{symb} = 14, N_{RB} = 12.

The structure of the radio time-frequency resource as shown in FIG. 5 is applied to the Uu interface. Furthermore, the radio time-frequency resource structure as in FIG. 5 may be similarly applied to sidelink.

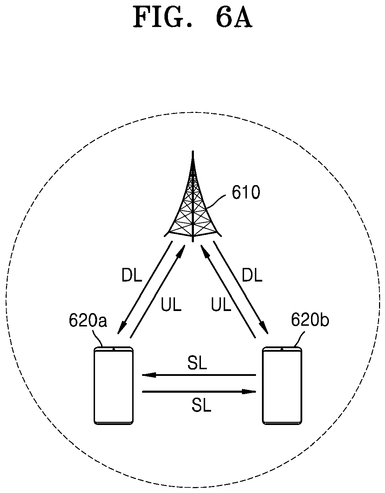

FIG. 6A illustrates a sidelink communication scenario, according to an embodiment of the disclosure.

FIG. 6A illustrates an in-coverage scenario when sidelink UEs 620a and 620b are located in the coverage of a BS 610. The sidelink UEs 620a and 620b may receive data and control information from the BS 610 in downlink (DL), or transmit data and control information to the BS in uplink (UL). In this case, the data and control information may be data and control information for sidelink communication, or data and control information for general cellular communication rather than sidelink communication. Furthermore, in FIG. 6A, the sidelink UEs 620a and 620b may transmit or receive data and control information for sidelink communication through sidelink (SL).

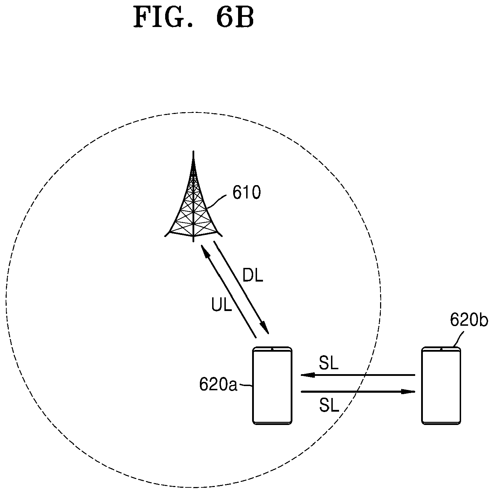

FIG. 6B illustrates a SL communication scenario, according to an embodiment of the disclosure.

Referring to FIG. 6B, a case of partial coverage is illustrated, in which of the SL UEs, the first UE 620a is located in the coverage of the BS 610 and the second UE 620b is located outside the coverage of the BS 610. The first UE 620a located in the coverage of the BS 610 may receive data and control information from the BS in a DL or transmit data and control information to the BS in a UL. The second UE 620b located outside the coverage of the BS 610 may not receive data and control information from the BS in a DL and may not transmit data and control information to the BS in a UL. The second UE 620b may transmit or receive data and control information for SL communication in an SL to or from the first UE 620a.

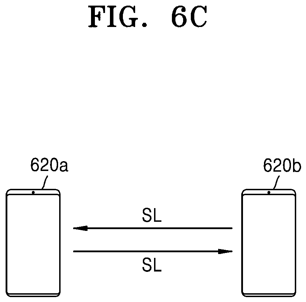

FIG. 6C illustrates an SL communication scenario, according to an embodiment of the disclosure.

Referring to FIG. 6C, it is illustrated that the SL UEs (e.g., the first UE 620a and the second UE 620b) are located outside the coverage of the BS. Hence, the first UE 620a and the second UE 620b may not receive data and control information from the BS in DL nor transmit data and control information to the BS in UL. The first UE 620a and the second UE 620b may transmit or receive data and control information for SL communication in SLs to or from each other.

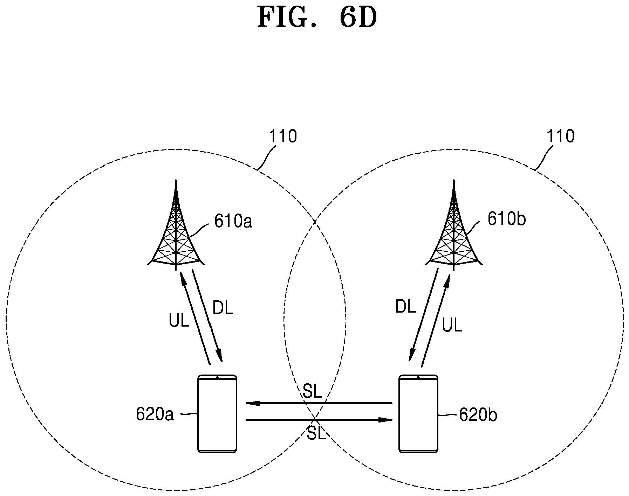

FIG. 6D illustrates a SL communication scenario, according to an embodiment of the disclosure.

Referring to FIG. 6D, the first UE 620a and the second UE 620b, which perform sidelink communication, may perform inter-cell SL communication while in a state of being connected to different BSs (e.g., a first BS 610a and a second BS 610b), e.g., in an RRC connected state, or in a camped state (e.g., in an RRC disconnected state, i.e., an RRC idle state). In this case, the first UE 620a may be an SL transmission UE and the second UE 620b may be an SL reception UE. Alternatively, the first UE 620a may be an SL reception UE and the second UE 620b may be an SL transmission UE. The first UE 620a may receive an SL dedicated system information block (SIB) from the BS 610a to which the first UE 620a is connected (or on which the first UE 620a is camped), and the second UE 620b may receive an SL dedicated SIB from the other BS 620b to which the second UE 620a is connected (or on which the second UE 620a is camped). In this case, the SL dedicated SIB information received by the first UE 620a and the SL dedicated SIB information received by the second UE 620b may be different from each other. Hence, it is required to unify the information to perform SL communication between the UEs located in different cells.

In the aforementioned examples of FIGS. 6A to 6D, although an SL system having two UEs (e.g., the first UE 610a and the second UE 620b) is described as an example for convenience of explanation, the disclosure is not limited thereto and may be equally applied to an SL system in which two or more UEs participate. ULs and DLs between the BSs 610 (610a and 610b) and SL UEs 620a and 620b may be referred to as Uu interfaces, and SLs between SL UEs may be referred to as PC-5 interfaces. The UL or DL and the Uu interface, or the sidelink and the PC-5 may be interchangeably used in the following description.

In the meantime, in the disclosure, the UE may refer to a vehicle that supports vehicle-to-vehicle (V2V) communication, a vehicle or a handset (e.g., a smartphone) of a pedestrian that supports vehicle-to-pedestrian (V2P) communication, a vehicle that supports a vehicle-to-network (V2N) communication, or a vehicle that supports vehicle-to-infrastructure (V2I) communication. Furthermore, in the disclosure, the UE may refer to a road side unit (RSU) equipped with a UE function, an RSU equipped with a BS function, or an RSU equipped with part of the BS function and part of the UE function.

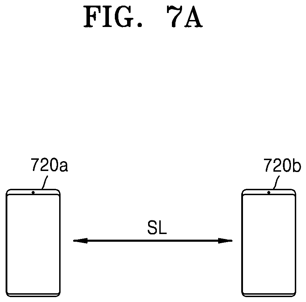

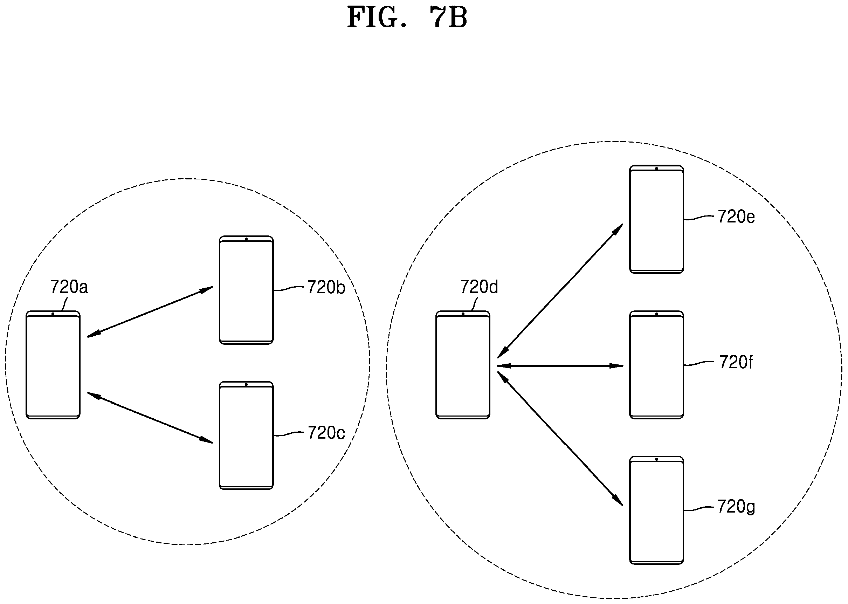

FIG. 7A and FIG. 7B are diagrams for describing a transmission method of SL communication, according to an embodiment of the disclosure.

Specifically, FIG. 7A represents a unicast method and FIG. 7B represents a groupcast method.

Referring to FIG. 7A, a transmission terminal 720a and a reception terminal 720b may perform one-to-one communication. The transmission method as shown in FIG. 7A may be referred to as unicast communication. Referring to FIG. 7B, a transmission UE 720a or 720d and reception UEs 720b, 720c, 720e, 720f and 720g may perform one-to-many communication. The transmission method as shown in FIG. 7B may referred to as groupcast or multicast. In FIG. 7B, the first UE 720a, the second UE 720b and the third UE 720c form a group and perform groupcast communication, and the fourth UE 720d, the fifth UE 720e, the sixth UE 720f and the seventh UE 720g form another group and perform groupcast communication. The UEs may perform groupcast communication in the group they belong to, and perform unicast, groupcast, or broadcast communication with at least one UE that belongs to another group. Two groups are shown in FIG. 7B for convenience of explanation, but the disclosure is not limited thereto and may be applied to a case that more groups are formed.

Although not shown in FIG. 7A or 7B, the SL UEs may perform broadcast communication. The broadcast communication refers to a method in which all the SL UEs receive data and control information transmitted from an SL transmission UE in sidelink. For example, when the first UE 720a is a transmission UE in FIG. 7B, the other UEs 720b, 720c, 720e, 720f and 720g may receive data and control information transmitted by the first UE 720a.

The aforementioned SL unicast communication, groupcast communication, and broadcast communication may be supported in an in-coverage scenario, a partial-coverage scenario or an out-of-coverage scenario.

For NR SL, unlike LTE SL, support for a transmission form in which a vehicle terminal transmits data only to a particular UE by unicasting and a transmission form in which the vehicle terminal transmits data to a plurality of UEs by groupcasting may be taken into account. For example, when a service scenario such as platooning, which is a technology of connecting two or more vehicles to a network and moving them as a grouped form is considered, the unicast and groupcast technology may be usefully used. Specifically, unicast communication may be used for the purpose of enabling a leader UE in a platooning based group to control a particular UE, and groupcast communication may be used for the purpose of controlling a group comprised of many particular UEs simultaneously.

Resource allocation in the V2X system may use the following method:

### (1) resource allocation mode 1

The scheduled resource allocation is a method by which a BS allocates a resource to be used for SL transmission to RRC connected UEs in a dedicated scheduling method. The scheduled resource allocation method may be effective in interference management and resource pool management (dynamic allocation and/or semi-persistent transmission) by allowing the BS to manage resources for SL. When there is data to be transmitted to other UE(s), the RRC connected UE may transmit, to the BS, information indicating that there is data to be transmitted to the other UE(s) in an RRC message or a media access control (MAC) control element (hereinafter, CE). For example, the RRC message transmitted by the UE to the BS may correspond to SL UE information (SidelinkUElnformation) or UE assistance information (UEAssistancelnformation) message, and the MAC CE may correspond to a buffer status reporting (BSR) MAC CE, a scheduling request (SR), or the like including at least one of an indicator indicating that it is a buffer status report (BSR) for V2X communication and information about the size of buffered data for SL communication.

### (2) resource allocation mode 2

Secondly, UE autonomous resource selection is a method by which an SL transmission or reception resource pool for V2X is provided to the UE in system information or an RRC message (for example, RRC reconfiguration (RRCReconfiguration) message or PC5-RRC message) and the UE selects a resource pool and resources according to a set rule. The UE autonomous resource selection may correspond to one or more of the following resource allocation methods:
> UE autonomously selects an SL resource for transmission.
> UE assists SL resource selection for other UEs.
> UE is configured with NR configured grant for SL transmission.
> UE schedules SL transmission of other UEs.
   - the resource selection method of the UE may include zone mapping, sensing based resource selection, random selection, etc.
   - furthermore, even when the UE is within the coverage of the BS, scheduled resource allocation or UE autonomous resource selection mode based resource allocation or resource selection may not be performed, in which case, the UE may perform V2X SL communication using a preconfigured SL transmission or reception resource pool (or preconfiguration resource pool).
   - moreover, when UEs for V2X communication is outside the coverage of the BS, the UE may perform V2X SL communication using the preconfigured SL transmission or reception resource pool.

In the disclosure, a case that there are a primary DRX group and a secondary DRX group is described as an example of the DRX group, but the disclosure is sure to be equally applied to a case that there are more than one primary DRX group or secondary DRX group.

In the disclosure, the UE, which will be described below, may be the first UE 620a or the second UE 620b.

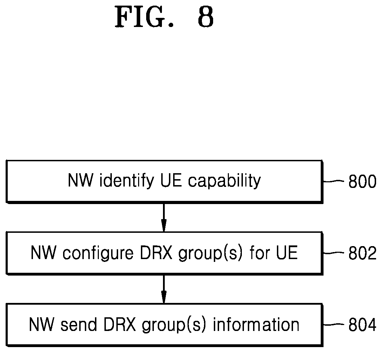

FIG. 8 is a diagram illustrating operations of a network processing a DRX configuration of a UE, according to an embodiment of the disclosure.

In an embodiment of the disclosure, the network may refer to a BS.

Referring to FIG. 8, the network may obtain and determine radio capability information of the UE, in operation 800. The radio capability information of the UE may include at least one or a combination of SL support, UL support, DRX support, DRX group support, primary DRX group support, and secondary DRX group support. The network may configure DRX of an RRC connected mode to be delivered to the UE, in operation 802. Configuring of the DRX may include at least one or a combination in Table 1 below.

**[Table 1]**

| |
|---|
| Serving cell index |
| Primary DRX group (0 or 1 more serving cell indexes belonging to primary DRX group) |
| Second DRX group (0 or 1 more serving cell indexes belonging to secondary DRX group) |
| Indicator indicating whether serving cell belongs to primary DRX group |
| Indicator indicating whether serving cell belongs to secondary DRX group |
| DRX operation parameter applied to primary DRX group (operation parameter of primary DRX group includes at least one or a combination of the followings: drx-onDurationTimer, drx-lnactivityTimer, drx-SlotOffset, drx-RetransmissionTimerDL, drx-RetransmissionTimerUL, drx-LongCycleStartOffset, drx-ShortCycle, drx-ShortCycleTimer, drx-HARQ-RTT-TimerDL, drx-HARQ-RTT-TimerUL, drx-RetransmissionTimerSL, drx-HARQ-RTT-TimerSL) |
| |
| DRX operation parameter applied to secondary DRX group |
| (operation parameter of secondary DRX group includes at least one or a combination of the followings: drx-onDurationTimer, drx-lnactivityTimer, drx-SlotOffset, drx-RetransmissionTimerDL, drx-RetransmissionTimerUL, drx-LongCycleStartOffset, drx-ShortCycle, drx-ShortCycleTimer, drx-HARQ-RTT-TimerDL, drx-HARQ-RTT-TimerUL, drx-RetransmissionTimerSL, drx-HARQ-RTT-TimerSL) |

The network may operate one or more DRX groups to support Uu DRX of the UE. The network may operate one or more DRX groups to support SL scheduling in the Uu DRX of the UE. The DRX group may include 0 or more serving cells. A serving cell belonging to the DRX group may support the Uu DRX of the UE or support SL scheduling in the Uu DRX of the UE.

The network may form a DRX group including a serving cell that supports SL scheduling apart from the DRX group that supports the Uu DRX. Specifically, information about a DRX group configured by the network for the UE may include at least one of serving cell list configuration to operate Uu DRX, serving cell list configuration not to operate Uu DRX to support SL scheduling mode 1, or serving cell list configuration to operate the Uu DRX to support the SL scheduling mode 1.

The network may configure information about a DRX group to operate Uu DRX and information about a DRX group to support SL scheduling mode 1 without operating Uu DRX mode or information about a Uu DRX group to support SL scheduling mode 1 to be explicitly indicated to the UE.

For example, the network may configure information about a DRX group to operate Uu DRX to be indicated to the UE. In this case, the UE may determine that other group information that is not configured is about a DRX group to support SL scheduling mode 1 without operating Uu DRX.

For example, the network may configure information about a DRX group to operate Uu DRX to be indicated to the UE. In this case, the UE may determine that the other group information that is not configured is about a DRX group that supports SL scheduling mode 1 and operates the Uu DRX.

For example, the network may configure information about a DRX group to support SL scheduling mode 1 without operating Uu DRX to be indicated to the UE. In this case, the UE may determine that the other group information that is not configured is about a DRX group to operate the Uu DRX.

For example, the network may configure information about a DRX group to support SL scheduling mode 1 without operating Uu DRX to be indicated to the UE. In this case, the UE may determine that the other group information that is not configured is about a DRX group to operate the Uu DRX while supporting SL scheduling mode 1.

For example, the network may configure information about a DRX group to operate Uu DRX while supporting SL scheduling mode 1 to be indicated to the UE. In this case, the UE may determine that the other group information that is not configured is about a DRX group to operate the Uu DRX.

For example, the network may configure information about a DRX group to operate Uu DRX while supporting SL scheduling mode 1 to be indicated to the UE. In this case, the UE may determine that other group information that is not configured is about a DRX group to support SL scheduling mode 1 without operating Uu DRX. For example, for the DRX group that supports SL scheduling mode 1, the network may configure a DRX operation parameter to support the SL scheduling mode 1 for the UE.

When the network determines to support the SL scheduling mode 1 in both the primary DRX group and the secondary DRX group, an operation parameter for supporting the SL scheduling mode 1 may be configured to have the same value in the primary DRX group and the secondary DRX group. For example, at least one operation parameter of drx-RetransmissionTimerSL or drx-HARQ-RTT-TimerSL may be configured to have the same value.

Alternatively, the network may configure the operation parameter to support the SL scheduling mode 1 to have different values in the primary DRX group and the secondary DRX group. For example, at least one operation parameter of drx-RetransmissionTimerSL or drx-HARQ-RTT-TimerSL may be configured to have a different value for each DRX group.

In operation 804, the network may transmit the DRX configuration information of the RRC connected mode of operation 802. The UE may determine whether a serving cell belongs to the primary DRX group or the secondary DRX group based on the configuration information of operation 804, and determine operation parameter information for each DRX group.

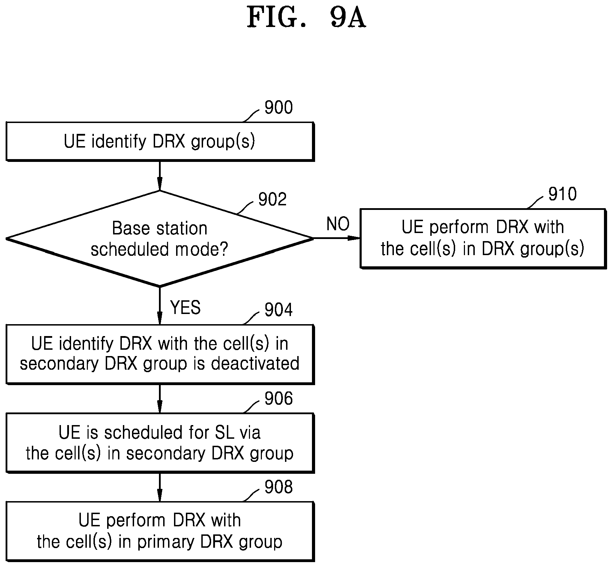

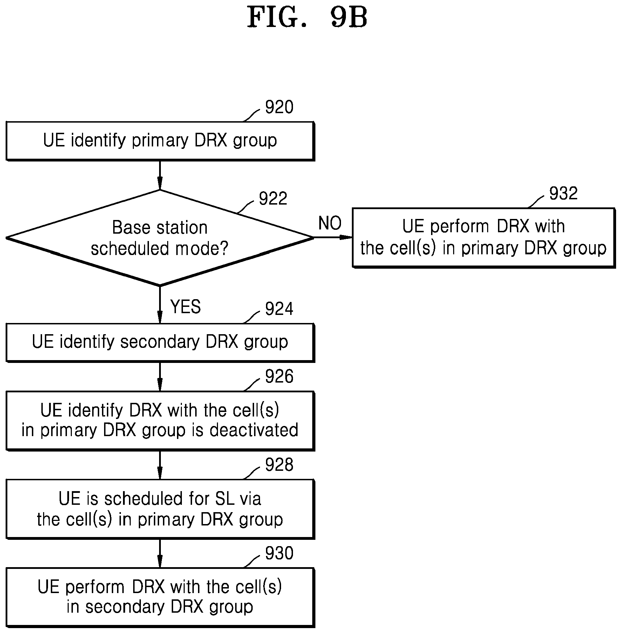

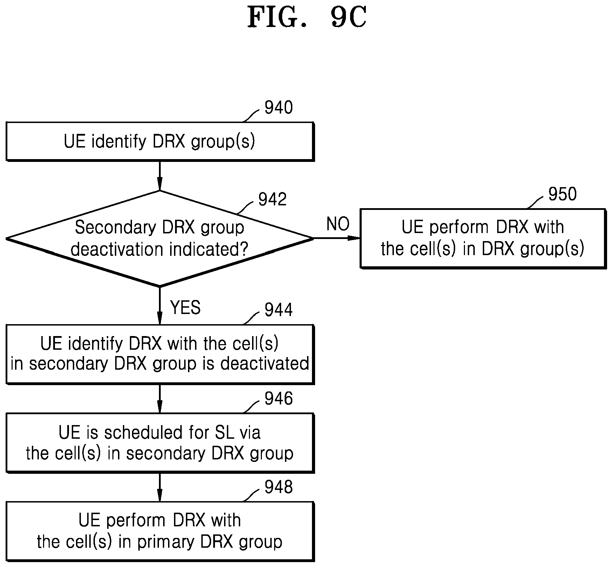

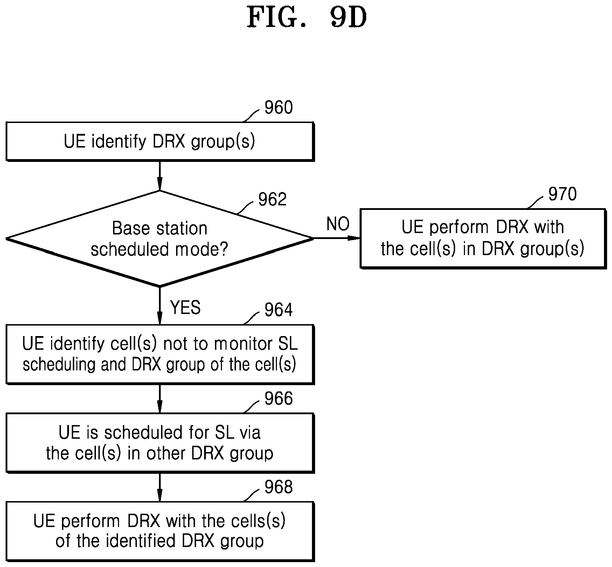

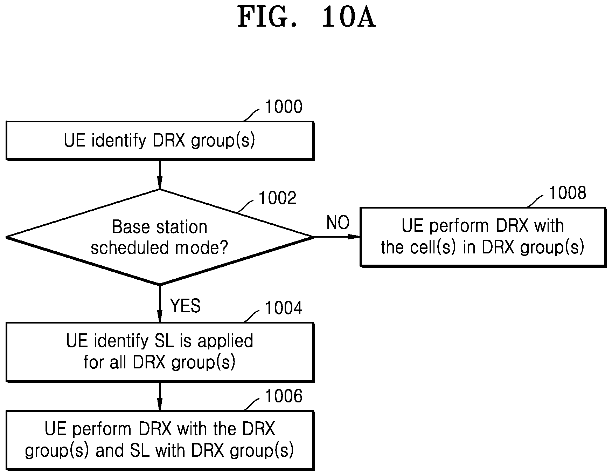

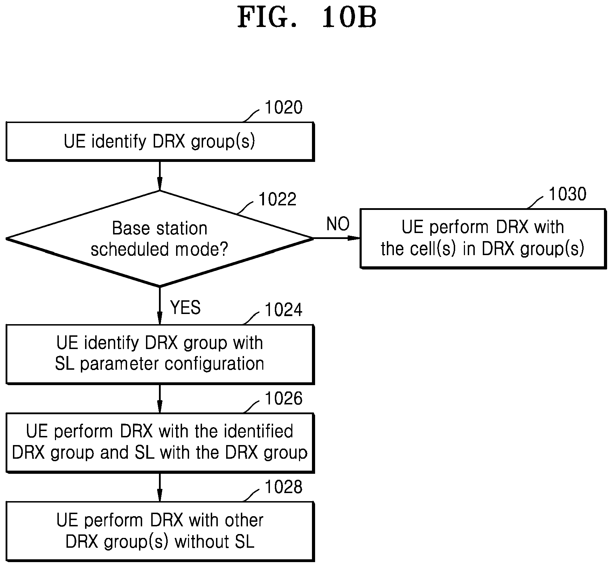

Next, referring to FIGS. 9A, 9B, 9C, 9D, 10A and 10B, various embodiments of an operation in which the UE processes DRX configuration while transmitting or receiving SL based data will be described.

When the UE operates a Uu DRX group and is configured with the SL scheduling mode 1 (a mode in which the BS schedules an SL transmission resource), the UE may operate Uu DRX through some Uu DRX group and have support for the SL scheduling mode 1 through some Uu DRX group. In this case, DRX of the Uu DRX group that supports SL scheduling may be deactivated. When the UE is configured with SL scheduling mode 2, the deactivated Uu DRX group may be activated back to operate the Uu DRX.

FIG. 9A is a diagram illustrating operations of a UE processing a DRX configuration, according to an embodiment of the disclosure.

Referring to FIG. 9A, the UE may obtain one or more DRX groups from a network, in operation 900. The UE may determine whether it is configured with SL scheduling mode 1 (BS scheduling mode), in operation 902. When it is determined in operation 902 that the SL scheduling mode 1 is configured, the UE may determine that Uu DRX through the secondary DRX group among the DRX groups obtained from the network is deactivated in operation 904. In other words, the UE may determine that Uu DRX is not operated with a serving cell belonging to the secondary DRX group. Resuming (activating) of the Uu DRX through the secondary DRX group may be performed when the SL scheduling mode 1 is not configured. The UE may have support for the SL scheduling mode 1 through the serving cell belonging to the secondary DRX group, in operation 906. The UE may operate Uu DRX through a serving cell belonging to the primary DRX group, in operation 908. When it is determined in operation 902 that the SL scheduling mode 1 is not configured, the UE may operate Uu DRX through the DRX group configured in operation 900, in operation 910.

FIG. 9B is a diagram illustrating operations of a UE processing a DRX configuration, according to an embodiment of the disclosure.

Referring to FIG. 9B, the UE may obtain the primary DRX group from the network, in operation 920. The UE may determine whether it is configured with SL scheduling mode 1 (BS scheduling mode), in operation 922. When it is determined in operation 922 that the SL scheduling mode 1 is configured, the UE may obtain the secondary DRX group from the network in operation 924. The UE may determine that Uu DRX through the primary DRX group is deactivated, in operation 926. In other words, the UE may determine that Uu DRX is not operated with a serving cell belonging to the primary DRX group. Resuming (activating) of the Uu DRX through the primary DRX group may be performed when the SL scheduling mode 1 is not configured. The UE may have support for the SL scheduling mode 1 through the serving cell belonging to the primary DRX group, in operation 928. The UE may operate Uu DRX through the serving cell belonging to the secondary DRX group, in operation 930. When it is determined in operation 922 that the SL scheduling mode 1 is not configured, the UE may operate Uu DRX through the DRX group configured in operation 920, in operation 932.

FIG. 9C is a diagram illustrating operations of a UE processing a DRX configuration, according to an embodiment of the disclosure.

Referring to FIG. 9C, the UE may obtain one or more DRX groups from a network, in operation 940. The UE may determine whether the network has configured deactivation of the secondary DRX group, in operation 942. When it is determined in operation 942 that deactivation of the secondary DRX group has been configured, the UE may determine that Uu DRX through the secondary DRX group is deactivated in operation 944. In other words, the UE may determine that Uu DRX is not operated with a serving cell belonging to the secondary DRX group. Resuming (activating) of the Uu DRX through the secondary DRX group may be performed when the SL scheduling mode 1 is not configured or when the network configures activation of the secondary DRX group. The UE may have support for the SL scheduling mode 1 through the serving cell belonging to the secondary DRX group, in operation 946. The UE may operate Uu DRX through a serving cell belonging to the primary DRX group, in operation 948. When it is determined in operation 942 that the network has not configured deactivation of the secondary DRX group, the UE may operate Uu DRX through the DRX group configured in operation 940, in operation 950.

Although a case of deactivating the secondary DRX group was described in the embodiment of FIG. 9C, the network is sure to be able to deactivate the primary DRX group, support the SL scheduling mode 1 through the primary DRX group, and configure Uu DRX to be operated by the secondary DRX group. In this case, the network may indicate primary DRX group deactivation configuration information to the UE. When the network determines to activate back the primary DRX group, the network may indicate the primary DRX activation configuration information to the UE.

In the embodiment of FIG. 9C, an example of the configuration information indicating deactivation or activation of a DRX group by the network to the UE may include at least one or a combination of pieces of information of Table 2 below.

**[Table 2]**

| |
|---|
| (1) DRX group activation/deactivation indicator |
| (2) When a spare bit of operation parameter of DRX group (e.g., at least one or a combination of onDurationTimer, InactivityTimer, ShortCycle, ShortCycleTimer, LongCycle, or LongCycleTimer)is set to a value that is not '0', it indicates deactivation, or when the spare bit is set to '0', it indicates activation (where spare bit is a value not in use, in which case the spare bit is assumed to be set to '0') |
| (3) When operation parameter of DRX group (e.g., at least one or a combination of onDurationTimer, InactivityTimer, ShortCycle, ShortCycleTimer, LongCycle, or LongCycleTimer)is set to 'infinite', it indicates deactivation, or when the spare bit is set to other value than 'infinite', it indicates activation by using a set value. |

FIG. 9D is a diagram illustrating operations of a UE processing a DRX configuration, according to an embodiment of the disclosure.

Referring to FIG. 9D, the UE may obtain one or more DRX groups from a network, in operation 960. The UE may determine whether it is configured with SL scheduling mode 1 (BS scheduling mode), in operation 962.

The UE may select or identify a DRX group to operate DRX, in operation 964. When it is determined in operation 962 that the SL scheduling mode 1 is configured, the UE may determine a serving cell configured not to monitor a physical downlink control channel (PDCCH) corresponding to an SL identifier (e.g., an SL cell radio network temporary identity (SL-RNTI) or SL configured scheduling RNTI (SLCS-RNTI)), i.e., a serving cell configured not to monitor the SL transmission scheduling in a search space of a serving cell, in operation 964. Furthermore, the UE may determine a DRX group that includes a serving cell configured not to monitor SL transmission scheduling and a DRX group that does not include a corresponding serving cell. The UE may determine that Uu DRX through the DRX group that does not include the corresponding serving cell is deactivated. Furthermore, the UE may determine that it may have support for SL scheduling through the DRX group that does not include the corresponding serving cell. Through the determining, the UE may select the DRX group including a serving cell configured not to monitor SL transmission scheduling as a DRX group to operate DRX.

For example, when a DRX group to which the serving cell configured not to monitor SL transmission scheduling belongs is determined as the primary DRX group, the UE may determine that Uu DRX is not operated with the serving cell belonging to the secondary DRX group. Resuming (activating) of the Uu DRX through the secondary DRX group may be performed when the SL scheduling mode 1 is not configured. The UE may have support for SL scheduling through a serving cell belonging to the secondary DRX group (i.e., a DRX group not selected to operate DRX), and operate Uu DRX through a serving cell belonging to the primary DRX group (i.e., a DRX group selected to operate DRX).

For example, when a DRX group to which the serving cell configured not to monitor SL transmission scheduling belongs is determined as the secondary DRX group, the UE may determine that Uu DRX is not operated with the serving cell belonging to the primary DRX group. Resuming (activating) of the Uu DRX through the primary DRX group may be performed when the SL scheduling mode 1 is not configured. The UE may have support for SL scheduling through a serving cell belonging to the primary DRX group (i.e., a DRX group not selected to operate DRX), and operate Uu DRX through a serving cell belonging to the secondary DRX group (i.e., a DRX group selected to operate DRX).

In operation 966, the UE may have support for the SL scheduling mode 1 through the serving cell belonging to the DRX group not selected to operate DRX in operation 964. In operation 968, the UE may operate Uu DRX through the serving cell belonging to the DRX group selected to operate DRX in operation 964. When it is determined in operation 962 that the SL scheduling mode 1 is not configured, the UE may operate Uu DRX through the DRX group configured in operation 960, in operation 970.

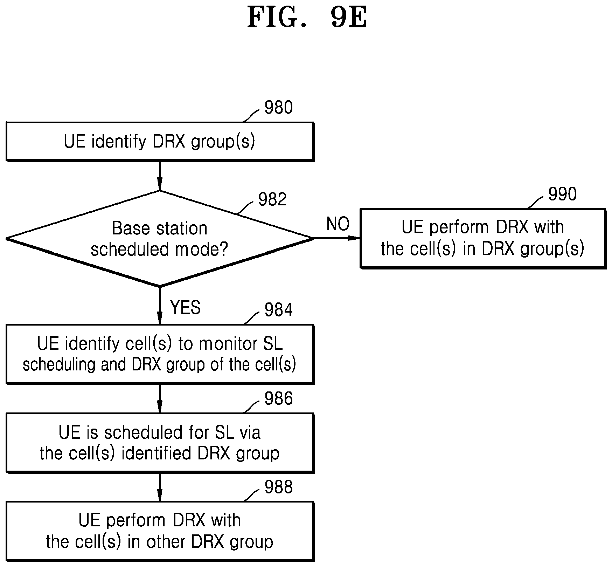

FIG. 9E is a diagram illustrating operations of a UE processing a DRX configuration, according to an embodiment of the disclosure.

Referring to FIG. 9E, the UE may obtain one or more DRX groups from a network, in operation 980. The UE may determine whether it is configured with SL scheduling mode 1 (BS scheduling mode), in operation 982.

The UE may select or identify a DRX group to have support for SL scheduling, in operation 984. When it is determined in operation 982 that the SL scheduling mode 1 is configured, the UE may determine a serving cell configured to monitor a PDCCH corresponding to an SL identifier (e.g., an SL-RNTI or an SLCS-RNTI), i.e., a serving cell configured to monitor the SL transmission scheduling in a search area of the serving cell, in operation 984. Furthermore, the UE may determine a DRX group that includes a serving cell configured to monitor SL transmission scheduling and a DRX group that does not include a corresponding serving cell. The UE may determine that Uu DRX through the DRX group that includes the corresponding serving cell is deactivated. Furthermore, the UE may determine that it may have support for SL scheduling through the DRX group that includes the corresponding serving cell. Through the determining, the UE may select the DRX group including a serving cell configured to monitor SL transmission scheduling as a DRX group to have support for SL scheduling.

For example, when a DRX group to which the serving cell configured to monitor SL transmission scheduling belongs is determined as the primary DRX group, the UE may determine that Uu DRX is not operated with the serving cell belonging to the primary DRX group. Resuming (activating) of the Uu DRX through the primary DRX group may be performed when the SL scheduling mode 1 is not configured. The UE may have support for SL scheduling through the serving cell belonging to the primary DRX group (i.e., a DRX group selected to have support for SL scheduling), and operate Uu DRX through a serving cell belonging to the secondary DRX group (i.e., a DRX group not selected to have support for SL scheduling).

For example, when a DRX group to which the serving cell configured to monitor SL transmission scheduling belongs is determined as the secondary DRX group, the UE may determine that Uu DRX is not operated with the serving cell belonging to the secondary DRX group. Resuming (activating) of the Uu DRX through the secondary DRX group may be performed when the SL scheduling mode 1 is not configured. The UE may have support for SL scheduling through the serving cell belonging to the secondary DRX group (i.e., a DRX group selected to have support for SL scheduling), and operate Uu DRX through a serving cell belonging to the primary DRX group (i.e., a DRX group not selected to have support for SL scheduling).

In operation 986, the UE may have support for the SL scheduling mode 1 through the serving cell belonging to the DRX group selected to have support for SL scheduling in operation 984. In operation 988, the UE may operate Uu DRX through the serving cell belonging to the DRX group not selected to have support for sidelink scheduling in operation 984. When it is determined in operation 982 that the SL scheduling mode 1 is not configured, the UE may operate Uu DRX through the DRX group configured in operation 980, in operation 990.

In the embodiments of FIGS. 9A to 9E, a case that the UE may operate Uu DRX through some Uu DRX group and operate SL scheduling mode 1 through some Uu DRX group was described. Next, referring to FIG. 10A, a case of supporting Uu DRX and SL scheduling mode 1 through all Uu DRX groups configured for the UE will now be described.

FIG. 10A is a diagram illustrating operations of a UE processing a DRX configuration, according to an embodiment of the disclosure.

Referring to FIG. 10A, the UE may obtain one or more DRX groups from the network, in operation 1000. The UE may determine whether it is configured with SL scheduling mode 1 (BS scheduling mode), in operation 1002. When it is determined in operation 1002 that the SL scheduling mode 1 is configured, the UE may determine that SL scheduling mode 1 is operated in the DRX group obtained from the network in operation 1004.

In an embodiment, an operation parameter of the DRX group obtained from the network may be applied with the same value to one or more DRX groups to operate SL scheduling mode 1 as well. In another embodiment, an operation parameter of the DRX group obtained from the network may be applied with a different value in operating the SL scheduling mode 1. When a different value is applied in operating the SL scheduling mode 1, the network may transmit a configuration of the operation parameter of one or more DRX groups corresponding to the UE. The operation parameter may refer to operation parameters of Table 1 including, for example, drx-RetransmissionTimerSL, drx-HARQ-RTT-TimerSL, etc.

The UE may operate Uu DRX and the SL scheduling mode 1 through the DRX group obtained from the network, in operation 1006. When it is determined in operation 1002 that the SL scheduling mode 1 is not configured, the UE may operate Uu DRX through the DRX group configured in operation 1000, in operation 1008.

Next, referring to FIG. 10B, a case of operating both the Uu DRX and the SL scheduling mode 1 through some of Uu DRX groups configured for the UE will be described. Only the Uu DRX may be operated in the other Uu DRX groups.

FIG. 10B is a diagram illustrating operations of a UE processing a DRX configuration, according to an embodiment of the disclosure.

Referring to FIG. 10B, the UE may obtain one or more DRX groups from the network, in operation 1020. The UE may determine whether it is configured with SL scheduling mode 1 (BS scheduling mode), in operation 1022. When it is determined in operation 1022 that the SL scheduling mode 1 is configured, the UE may obtain information about a DRX group, in which an operation parameter for operating the SL scheduling mode 1 is configured among the DRX groups obtained from the network, in operation 1024. The operation parameter for operating the SL scheduling mode 1 may refer to Table 1 including, for example, drx-RetransmissionTimerSL, drx-HARQ-RTT-TimerSL, etc.

In operation 1026, the UE may operate the Uu DRX and the SL scheduling mode 1 through the DRX group in which the operation parameter for operating the SL scheduling mode 1 is configured in operation 1024. In other words, the UE may have support for the SL scheduling mode 1 through a serving cell belonging to the DRX group in which the operation parameter for operating the SL scheduling mode 1 is configured.

In operation 1028, the UE may operate the Uu DRX through a serving cell belonging to the other Uu DRX group (i.e., a DRX group except for the DRX group in which the operation parameter for operating the SL scheduling mode 1 is configured among the DRX groups obtained from the network). In other words, the UE may not have support for the SL scheduling mode 1 through the serving cell belonging to the other Uu DRX group. When it is determined in operation 1022 that the SL scheduling mode 1 is not configured, the UE may operate the Uu DRX through the DRX group configured in operation 1000, in operation 1030.

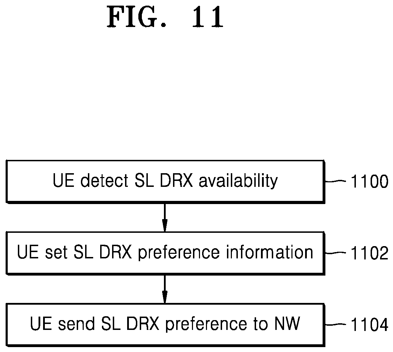

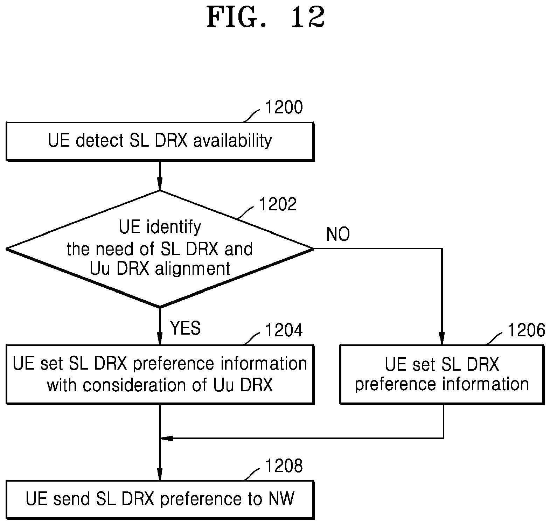

When performing Uu based data transmission or reception, the UE may operate Uu DRX, and when performing SL based data transmission or reception, the UE may operate SL DRX. Next, referring to FIGS. 11 and 12, a method of minimizing battery consumption of the UE by making a point in time to monitor Uu DRX coincide with a point in time to monitor SL DRX to minimize a time for which to perform Uu monitoring and SL monitoring.

FIG. 11 is a diagram illustrating operations of a UE processing SL DRX and Uu link DRX, according to an embodiment of the disclosure.

FIG. 11 illustrates a method of processing an SL DRX configuration when there is no need to make the point in time to monitor Uu DRX coincide with the point in time to monitor SL DRX. In an embodiment, operations of FIG. 11 may be performed when the UE is in an RRC_CONNECTED state. In another embodiment, the operations of FIG. 11 may be performed when the UE is in an RRC_CONNECTED state and configured with a BS scheduling mode (SL scheduling mode 1).

Referring to FIG. 11, in operation 1100, when the UE is performing SL based data transmission or reception and supports SL DRX, the UE may determine whether there is a need to indicate SL DRX preference information to the BS. Alternatively, while SL DRX is activated, the UE may determine whether there is a need to indicate changed SL DRX preference information to the BS. When sl-drx-PreferenceProhibitTimer is set, there is no need for the UE to report the changed SL DRX preference information to the BS before the timer is expired.

The UE may configure SL DRX preference information, in operation 1102. In other words, in operation 1102, the UE may configure SL DRX operation parameter preference information. In this case, the SL DRX preference information may include DRX operation parameter preference information, which is information about parameters for operating SL DRX preferred by the UE. The SL DRX operation parameter preference information may include at least one or a combination of pieces of information in Table 3 below. The UE may configure a UEAssistancelnformation message or a SidelinkUElnformation message including the SL DRX operation parameter preference information.

**[Table 3]**

| |
|---|
| SL-QoS-Profile (including latency, packet delay budget, etc.) |
| PQI (which may include PQI that has been used by UE to transmit SidelinkUElnformation) |
| Sidelink traffic pattern |
| sl-drx-Preference |
| preferredSLDRX-LongCycle |
| preferredSLDRX-InactivityTimer |
| preferredSLDRX-ShortCycyle |
| preferredSLDRX-ShortCycleTimer |

The UE may transmit the SL DRX preference information to the BS, in operation 1104. For example, the UE may transmit the UEAssistancelnformation message or the SidelinkUElnformation message including the SL DRX operation parameter preference information to the BS, in operation 1104. For example, the UE may transmit the SL DRX preference information including SL DRX operation parameter preference information to the BS in the UEAssistancelnformation message or the SidelinkUElnformation message, in operation 1104.

When sl-drx-PreferenceProhibitTimer is set, the UE may start this timer (i.e., sl-drx-PreferenceProhibitTimer) and transmit a message including the SL DRX preference information.

Based on the SL DRX operation parameter preference information reported by the UE, the BS may configure an SL DRX operation parameter for the UE.

FIG. 12 is a diagram illustrating operations of a UE processing SL DRX and Uu link DRX, according to an embodiment of the disclosure.

FIG. 12 illustrates a method of processing an SL DRX configuration including an occasion when it is determined that there is a need to make the point in time to monitor Uu DRX coincide with the point in time to monitor SL DRX. In an embodiment, operations of FIG. 12 may be performed when the UE is in the RRC_CONNECTED state. In another embodiment, the operations of FIG. 12 may be performed when the UE is in an RRC_CONNECTED state and configured with a BS scheduling mode (SL scheduling mode 1).

Referring to FIG. 12, in operation 1200, when the UE is performing SL based data transmission or reception and supports SL DRX, the UE may determine whether there is a need to indicate SL DRX preference information to the BS. Alternatively, while SL DRX is activated, the UE may determine whether there is a need to indicate changed SL DRX preference information to the BS. The UE may determine whether there is a need to indicate information about preference for correspondence between the SL DRX configuration and the Uu DRX configuration to the BS. When sl-drx-PreferenceProhibitTimer is set, there is no need for the UE to report the changed SL DRX preference information to the BS before the timer (i.e., sl-drx-PreferenceProhibitTimer) is expired.

The UE may determine whether there is a need to indicate information about preference for correspondence between the SL DRX configuration and the Uu DRX configuration to the BS, in operation 1202.

When it is determined in operation 1202 that the information about preference for correspondence between the SL DRX configuration and the Uu DRX configuration is to be indicated, the UE may configure SL DRX preference information, in operation 1204. In otherwords, in operation 1204, the UE may configure SL DRX operation parameter preference information. In this case, the SL DRX preference information may include DRX operation parameter preference information, which is information about parameters for operating SL DRX preferred by the UE.

In an embodiment of the disclosure, to notify the information about preference for correspondence between the SL DRX configuration and the Uu DRX configuration, the SL DRX operation parameter preference information may be configured to have a value corresponding to a Uu DRX operation parameter. The SL DRX operation parameter preference information may include at least one or a combination of pieces of information in Table 4 below. The UE may configure a UEAssistancelnformation message or a SidelinkUElnformation message including the SL DRX operation parameter preference information.

**[Table 4]**

| |
|---|
| SL-QoS-Profile (including latency, packet delay budget, etc.) |
| PQI (which may include PQI that has been used by UE to transmit SidelinkUElnformation) |
| Sidelink traffic pattern |
| sl-drx-Preference |
| sl-drx-ul-drx-alignment-Preference (when UE prefers correspondence between SL DRX configuration and Uu DRX configuration, this parameter may be included. In case of operating correspondence or non-correspondence of this parameter value, when UE prefers correspondence between SL DRX configuration and Uu DRX configuration, the parameter value may be denoted as correspondence.) |
| preferredSLDRX-LongCycle |
| preferredSLDRX-InactivityTimer |
| preferredSLDRX-ShortCycyle |
| preferredSLDRX-ShortCycleTimer |

When it is determined in operation 1202 that there is no need to report the information about preference for correspondence between the SL DRX configuration and the Uu DRX configuration, the UE may determine to report SL DRX preference information to the BS and configure SL DRX preference information in operation 1206. In an embodiment of the disclosure, the SL DRX operation parameter preference information may include at least one or a combination of pieces of information in Table 4 below. The UE may configure a UEAssistancelnformation message or a SidelinkUElnformation message including the SL DRX operation parameter preference information.

In an embodiment of the disclosure, in operation 1204, a second UE may configure SL DRX preference information. When the second UE configures SL DRX preference information, the second UE may transmit the configured SL DRX preference information to a first UE. In operation 1208, the first UE may transmit the SL DRX preference information to the BS. It is not, however, limited thereto, and the UE in the disclosure may be the first UE or the second UE.

The UE may transmit the SL DRX preference information to the BS, in operation 1208. For example, the UE may transmit the UEAssistancelnformation message or the SidelinkUElnformation message including the SL DRX operation parameter preference information to the BS, in operation 1208. For example, the UE may transmit the SL DRX preference information including SL DRX operation parameter preference information to the BS in the UEAssistancelnformation message or the SidelinkUElnformation message, in operation 1208. When sl-drx-PreferenceProhibitTimer is set, the UE may start this timer (i.e., sl-drx-PreferenceProhibitTimer) and transmit a message including the SL DRX preference information. Based on the SL DRX operation parameter preference information reported by the UE, the BS may configure an SL DRX operation parameter for the UE.

In another embodiment, in operation 1202, when there is no need to report the preference information about preference for correspondence between the SL DRX configuration and the Uu DRX configuration, the UE may determine to report the Uu DRX preference information to the BS. In this case, the UE may configure a UEAssistancelnformation message including the Uu DRX preference information and transmit it to the BS. The BS may configure a Uu DRX operation parameter for the UE based on the Uu DRX preference information.

In another embodiment of the disclosure, when it is determined in operation 1202 that the UE prefers correspondence between the SL DRX configuration and the Uu DRX configuration, the UE may configure to make the preference information about the Uu DRX operation parameter correspond to the SL DRX operation parameter and report this to the BS. In this case, the UE may configure a UEAssistancelnformation message including the Uu DRX operation parameter preference information that includes at least one or a combination of pieces of information in Table 5 configured to correspond to the SL DRX operation parameter. The UE may transmit the UEAssistancelnformation message including the Uu DRX operation parameter preference information to the BS. When drx-PreferenceProhibitTimer is set, the UE may start this timer (i.e., drx-PreferenceProhibitTimer) and transmit a message including the Uu DRX operation parameter preference information.

Based on the Uu DRX operation parameter preference information reported by the UE, the BS may configure a Uu DRX operation parameter for the UE.

**[Table 5]**

| |
|---|
| drx-Preference |
| preferredDRX-LongCycle |
| preferredDRX-InactivityTimer |
| preferred DRX-ShortCycyle |
| preferredDRX-ShortCycleTimer |

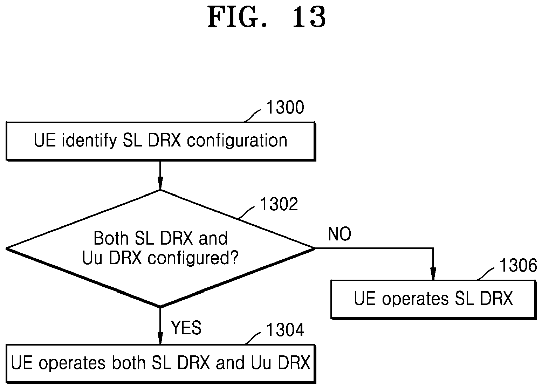

FIG. 13 is a diagram illustrating operations of a UE processing sidelink DRX and Uu link DRX, according to an embodiment of the disclosure.

Referring to FIG. 13, the UE may obtain an SL DRX operation parameter configuration in operation 1300. For example, the SL DRX operation parameter configuration may be configured by the BS based on SL DRX preference information or Uu DRX preference information reported by the UE to the BS in the embodiment of FIG. 11 or 12. In another example, the SL DRX operation parameter configuration may be configured by the UE based on the Uu DRX configuration received by the UE from the BS.

An embodiment in which the BS configures an SL DRX operation parameter based on the SL DRX operation parameter preference information is as follows: (1) when information indicating that the UE prefers correspondence between Uu DRX and SL DRX is included, the BS configures the SL DRX operation parameter to have a value corresponding to the Uu DRX operation parameter and provide it to the UE. (2) the BS may configure an SL DRX operation parameter to have a value corresponding to an operation parameter of one of the Uu DRX groups and provide it to the UE. (3) the BS may indicate for the UE to configure an SL DRX operation parameter value to be the operation parameter value of the Uu DRX group by providing DRX group information of Uu DRX instead of separately configuring an operation parameter of SL DRX. (4) the BS may newly configure a Uu DRX group instead of separately configuring an SL DRX operation parameter for the UE to configure an SL DRX operation parameter based on an operation parameter of the newly configured Uu DRX group.

An embodiment in which the UE obtains an SL DRX operation parameter configuration based on Uu DRX configuration information is as follows: The UE may determine whether the operation parameter of a Uu DRX group may correspond to the SL DRX operation parameter, and configure an SL DRX operation parameter to be an operation parameter value of a Uu DRX group determined to correspond to.

The UE may determine whether both SL DRX and Uu DRX are configured, in operation 1302. Operation 1302 may include at least one of an occasion when both SL DRX and Uu DRX are configured, an occasion when SL DRX is configured while Uu DRX is being performed, or an occasion when Uu DRX is configured while SL DRX is being performed.

When it is determined in operation 1302 that the UE has both the SL DRX configuration and the Uu DRX configuration, the UE may perform an SL DRX operation and a Uu DRX operation according to their respective configurations in operation 1304. During a DRX operation, the UE may perform SL data transmission or reception of a BS scheduling mode based on the configured SL DRX operation parameter and Uu DRX operation parameter. When it is determined in operation 1302 that SL DRX is configured, the UE may perform an SL DRX operation according to the SL DRX configuration.

In another embodiment, when it is determined in operation 1302 that Uu DRX is configured, the UE may perform a Uu DRX operation according to the Uu DRX configuration.

In an embodiment of the disclosure, when the BS configures an SL DRX parameter, the UE may maintain the SL DRX configuration currently in use until receiving a new SL DRX configuration from the BS.

When the UE performs handover to a target cell, the UE, once determining that there is a change in the SL DRX preference information transmitted through the serving cell, may transmit an EAssistancelnformation message or a SidelinkUElnformation message including SL DRX preference information to the target cell.

Methods according to the claims of the disclosure or the embodiments of the disclosure described in the specification may be implemented in hardware, software, or a combination of hardware and software.

When implemented in software, a computer-readable storage medium storing one or more programs (software modules) may be provided. The one or more programs stored in the computer-readable storage medium are configured for execution by one or more processors in an electronic device. The one or more programs may include instructions that cause the electronic device to perform the methods in accordance with the claims of the disclosure or the embodiments described in the specification.

The programs (software modules, software) may be stored in a random access memory (RAM), a non-volatile memory including a flash memory, a read only memory (ROM), an electrically erasable programmable ROM (EEPROM), a magnetic disc storage device, a compact disc-ROM (CD-ROM), a digital versatile disc (DVD) or other types of optical storage device, and/or a magnetic cassette. Alternatively, the programs may be stored in a memory including a combination of some or all of them. There may be a plurality of memories.

The program may also be stored in an attachable storage device that may be accessed over a communication network including the Internet, an intranet, a local area network (LAN), a wide LAN (WLAN), or a storage area network (SAN), or a combination thereof. The storage device may be connected to an apparatus performing the embodiments of the disclosure through an external port. In addition, a separate storage device in the communication network may be connected to the apparatus performing the embodiments of the disclosure.

In the embodiments of the disclosure, a component is represented in a singular or plural form. It should be understood, however, that the singular or plural representations are selected appropriately according to the situations presented for convenience of explanation, and the disclosure is not limited to the singular or plural form of the component. Further, the component expressed in the plural form may also imply the singular form, and vice versa.

Several embodiments of the disclosure have thus been described, but it will be understood that various modifications can be made without departing the scope of the disclosure. Thus, it will be apparent to those ordinary skilled in the art that the disclosure is not limited to the embodiments described, but can encompass not only the appended claims but the equivalents.

## Claims

1. A method by which a first user equipment (UE) operates in a wireless communication system, the method comprising:
transmitting sidelink discontinuous reception (DRX) preference information to a base station (BS);
receiving Uu DRX configuration information from the BS, based on the sidelink DRX preference information; and
transmitting data to a second UE, based on at least one of the Uu DRX configuration information or sidelink DRX configuration information.

2. The method of claim 1, further comprising: receiving the sidelink DRX configuration information from the BS,
wherein the sidelink DRX configuration information is determined based on the sidelink DRX preference information.

3. The method of claim 1, further comprising: determining the sidelink DRX configuration information, based on the Uu DRX configuration information.

4. The method of claim 1, wherein the sidelink DRX preference information comprises information indicating whether the sidelink DRX configuration information corresponds to the Uu DRX configuration information, and
wherein, when the first UE requests a correspondence between the sidelink DRX configuration information and the Uu DRX configuration information, the sidelink DRX preference information is configured to have a value corresponding to a Uu DRX operation parameter.

5. The method of claim 1, wherein the sidelink DRX preference information is configured by the second UE.

6. A method by which a base station (BS) operates in a wireless communication system, the method comprising:
receiving sidelink discontinuous reception (DRX) preference information from a first user equipment (UE);
determining Uu DRX configuration information, based on the sidelink DRX preference information; and
transmitting the Uu DRX configuration information to the first UE.

7. The method of claim 6, further comprising: transmitting sidelink DRX configuration information to the first UE,
wherein the sidelink DRX configuration information is determined based on the sidelink DRX preference information.

8. The method of claim 7, wherein the sidelink DRX configuration information is determined based on the Uu DRX configuration information.

9. The method of claim 6, wherein the sidelink DRX preference information comprises information indicating whether the sidelink DRX configuration information corresponds to the Uu DRX configuration information, and
wherein, when the first UE requests a correspondence between the sidelink DRX configuration information and the Uu DRX configuration information, the sidelink DRX preference information is configured to have a value corresponding to a Uu DRX operation parameter.

10. The method of claim 6, wherein the sidelink DRX preference information is configured by a second UE.

11. A first user equipment (UE) operating in a wireless communication system, the first UE comprising:
a communicator; and
a controller,
wherein the controller is configured to
control the communicator to transmit sidelink discontinuous reception (DRX) preference information to a base station (BS),
control the communicator to receive Uu DRX configuration information from the BS, based on the sidelink DRX preference information,
control the communicator to transmit data to a second UE, based on at least one of the Uu DRX configuration information or sidelink DRX configuration information.

12. The first UE of claim 11, wherein the controller is configured to receive the sidelink DRX configuration information from the BS, and
wherein the sidelink DRX configuration information is determined based on the sidelink DRX preference information.

13. The first UE of claim 11, wherein the controller is configured to determine the sidelink DRX configuration information, based on the Uu DRX configuration information.

14. The first UE of claim 11, wherein the sidelink DRX preference information comprises information indicating whether the sidelink DRX configuration information corresponds to the Uu DRX configuration information, and
wherein, when the first UE requests a correspondence between the sidelink DRX configuration information and the Uu DRX configuration information, the sidelink DRX preference information is configured to have a value corresponding to a Uu DRX operation parameter.

15. The first UE of claim 11, wherein the sidelink DRX preference information is configured by the second UE.
